Europäisches Patentamt

European Patent Office

Office européen des brevets

(19)

(11) Veröffentlichungsnummer : **0 044 930**
**B1**

(12) **EUROPÄISCHE PATENTSCHRIFT**

(45) Veröffentlichungstag der Patentschrift :
26.09.84

(51) Int. Cl.³ : **G 06 F 15/21, G 06 F 3/14**

(21) Anmeldenummer : **81104548.3**

(22) Anmeldetag : **12.06.81**

(54) **Textbearbeitungseinrichtung mit einer Anzeigeeinrichtung.**

(30) Priorität : **26.07.80 DE 3028439**

(43) Veröffentlichungstag der Anmeldung :
**03.02.82 Patentblatt 82/05**

(45) Bekanntmachung des Hinweises auf die Patenterteilung : **26.09.84 Patentblatt 84/39**

(84) Benannte Vertragsstaaten :
**CH DE FR GB IT LI**

(56) Entgegenhaltungen :
**AT-B- 333 800**
**DE-A- 2 606 491**
**DE-A- 2 742 992**
**DE-A- 2 746 807**
**DE-A- 2 835 320**
**Computer, Oktober 1975, S. 53-59**

(73) Patentinhaber : **OLYMPIA WERKE AG**
**Postfach 960 Olympiastrasse**
**D-2940 Wilhelmshaven (DE)**

(72) Erfinder : **Klingenberg, Wolfgang**
**Bodenstedtsweg 2**
**D-3153 Lahstedt (DE)**

EP 0 044 930 B1

**Beschreibung**

Die Erfindung betrifft eine Textbearbeitungseinrichtung der im Oberbegriff des Anspruchs 1 angegebenen Art.

Aus der DE-OS 27 42 992 ist eine Textbearbeitungseinrichtung bekannt, die eine Anzeigeeinrichtung für die Darstellung eines Textabschnittes aufweist. Mittels einer Tastatur eingegebene Textzeichen werden in einer auf der rechten Seite der Anzeigeeinrichtung angeordneten Zeicheneingabeposition dargestellt und bei jeder neuen Eingabe eines Zeichens um eine Stelle nach links verschoben, so daß in der äußerst rechten Stelle des Textdarstellungsbereiches der Anzeigeeinrichtung immer das jeweils zuletzt eingegebene Zeichen und im gesamten Textdarstellungsbereich die jeweils zuletzt eingegebenen 15 Zeichen zu sehen sind. Die Textbearbeitungseinrichtung weist auch einen Datenspeicher auf, in den der eingegebene Text eingespeichert und aus dem er ausgelesen und mit jeweils 15 Zeichen umfassenden Abschnitten auf der Anzeigeeinrichtung dargestellt werden kann.

Die Anzeigeeinrichtung soll dem Bediener die Möglichkeit geben, vor Abdruck eines eingegebenen Textes Eingabefehler verbessern oder Textänderungen vornehmen zu können. Im allgemeinen wird ein eingegebener Fehler nicht unmittelbar bei der Eingabe festgestellt, sondern erst, wenn einige weitere Zeichen eingegeben worden sind. Das fehlerhafte Zeichen steht dann aber nicht mehr in der Eingabeposition, sondern ist um die Anzahl der danach eingegebenen Zeichen nach links verschoben. Zum Zwecke der Korrektur muß der Text nun nach rechts verschoben werden, bis das fehlerhafte Zeichen wiederum in der Eingabeposition steht. Dem Bediener stehen für das Verschieben des Textes und die entschiedenen Korrektur- und Änderungsmaßnahmen besondere Eingabemittel zur Verfügung. Es besteht weiterhin die Möglichkeit, einen im Datenspeicher enthaltenen Text abzurufen und so lange auf der Anzeigeeinrichtung zu verschieben, bis auch hier eine für Änderungen vorgesehene Stelle des Textes in der Zeicheneingabeposition steht. In beiden Fällen ist aber dann der hinter der zu verbessernden Stelle folgende Text (also der vorher auf der Anzeigeeinrichtung rechts der zu verbessernden Stelle dargestellt gewesene Text) für den Bediener nicht mehr zu sehen. Die Korrektur- oder Änderungsmaßnahmen sind für ihn deshalb sehr erschwert, weil er die Korrekturstelle nicht im Zusammenhang mit dem sie umgebenden Text sehen und kontrollieren kann und der Schreibfehler oftmals erst bei Anschauung des ganzen Wortes oder zumindest der nächstfolgenden Zeichen erkennbar ist. Eine besondere Erschwernis tritt durch diesen Nachteil außerdem auf, wenn ein Teil des Textes, z. B. ein Wort, eingefügt oder gelöscht werden soll. Hier wird sich der Bediener im Regelfalle vor Vornahme der Änderung eine handschriftliche Notiz machen müssen, weil ihm während der Korrektur der zusammenhängende überblick auf der Anzeigeeinrichtung fehlt.

Aus der Zeitschrift Computer, Oktober 1975, Seiten 53 bis 59 und aus der DE-A1-26 06 491 sind Textbearbeitungsgeräte bekannt, die einen Bildschirm zur Darstellung mehrerer vollständiger Textzeilen oder einer ganzen Textseite verwenden. Die Zeichendarstellung erfolgt hier von links nach rechts fortlaufend ohne Verschiebung der bereits dargestellten Zeichen und entspricht der gewohnten Schreibweise auf Papier. Um dem Bediener die jeweils nächste Eingabeposition auf dem Bildschirm anzugeben, ist ein Cursor vorgesehen, der bei jedem eingegebenen Zeichen automatisch einen Schritt in die nächste Position ausführt, vom Bediener mittels der Tastatur aber auch willkürlich verschoben werden kann.

Bei einer solchen Ausführung tritt zwar das Problem der nicht im Zusammenhang sicht- und beurteilbaren Textdarstellung um eine korrekturstelle herum nicht auf, jedoch stellt die Verwendung eines Bildschirmes derart großer Stellenzahl eine sehr teure Lösung dar, ein solcherart ausgestattetes Textbearbeitungsgerät wird sehr voluminös und die notwendigerweise sehr kleine Zeichendarstellung ist schlecht lesbar.

Der Erfindung liegt die Aufgabe zugrunde, eine Textbearbeitungseinrichtung mit einer Anzeigeeinrichtung der eingangs beschriebenen Art zu schaffen, bei der eine bessere Kontrolle bei vorzunehmenden Änderungen und Korrekturen eingegebener Texte möglich ist.

Diese Aufgabe wird erfindungsgemäß durch die im Anspruch 1 angegebenen Merkmale gelöst. Die mit der Erfindung erzielten Vorteile bestehen insbesondere darin, daß Änderungen und Korrekturen an einem eingegebenen Text nicht mehr nur in der letzten Stelle des auf der Anzeigeeinrichtung dargestellten Textabschnittes vorgenommen werden können, sondern daß der Textabschnitt so dargestellt wird, daß sowohl links als auch rechts der zu verändernden oder korrigierenden Stelle der zugehörige Teil des Textes zu sehen ist. Der Bediener der Textbearbeitungseinrichtung hat damit eine Möglichkeit der zusammenhängend lesbaren Kontrolle des einen Änderungsbereich einschließenden Textes, wodurch die Textbearbeitung erheblich vereinfacht und die Häufigkeit von Fehleingaben verringert wird.

Ein weiterer Vorteil der Erfindung besteht darin, daß sowohl bei der Neueingabe eines Textes als auch bei der Vornahme von Korrekturen und Änderungen in einem bereits eingegebenen Text die volle Darstellungskapazität der Anzeigeeinrichtung ausgenutzt wird.

Weitere vorteilhafte Ausgestaltungen der Erfindung ergeben sich aus den Unteransprüchen. Von den Figuren zeigen :

Figur 1 ein Blockschaltbild einer Textbearbeitungseinrichtung und

Figuren 2 bis 4 Darstellungen einer Anzeigeeinrichtung.

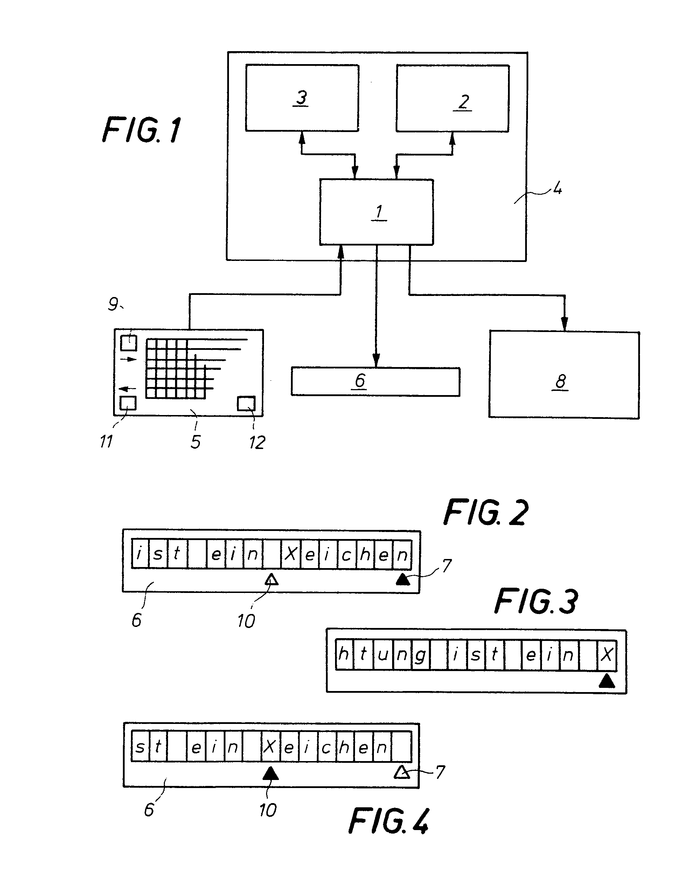

In Figur 1 ist das Blockschaltbild eines Textautomaten mit seinen für das Verständnis der Erfindung wesentlichen Baugruppen dargestellt. Es weist eine mikroprogrammgesteuerte, aus einer zentralen Rechen- und Steuereinheit 1, einem Mikroprogrammspeicher 2 und einem Datenspeicher 3 bestehende Maschinensteuerung 4 auf, von der mittels einer alpha-numerische und Funktionstasten aufweisenden Tastatur 5 eingegebene Daten in an sich bekannter Weise bearbeitet und von der auszugebende Daten an ein Druckwerk 8 zur Darstellung auf einem Aufzeichnungsträger ausgegeben werden. Daneben können Daten nach Umsetzung in einer nicht näher dargestellten Decodier- und Treiberstufe auf einer Anzeigeeinrichtung 6 dargestellt werden.

Von einem Bediener mittels der Tastatur 5 eingegebene Textdaten gelangen unter Steuerung durch die zentrale Rechen- und Steuereinheit 1 und das im Mikroprogrammspeicher 2 abgelegte Betriebsprogramm Zeichen für Zeichen auf der Anzeigeeinrichtung 6 zur Darstellung. In jeweils verschiedenen Betriebsarten kann dabei vorgesehen sein, daß die bei Füllung der Anzeigeeinrichtung 6 aus dieser überlaufenden Zeichen automatisch durch das Druckwerk 8 ausgeschrieben werden oder daß die Zeichen neben ihrer Darstellung auf der Anzeigeeinrichtung 6 in codierter Form im Datenspeicher 3 abgelegt werden und ihr Abdruck durch das Druckwerk 8 erst nach deren Auslesen aus dem Datenspeicher auf einen besonderen Befehl hin erfolgt. Es ist auch möglich, die Darstellung der Zeichen auf der Anzeigeeinrichtung 6 und deren Ablage im Datenspeicher 3 ohne Ausdrucken vornehmen zu lassen.

Die Anzeigeeinrichtung 6 weist einen in Figur 2 dargestellten Aufbau auf. Zeichen, die vom Bediener mittels der Tastatur 5 eingegeben werden, gelangen in einer besonders gekennzeichneten Zeicheneingabeposition 7 der Anzeigeeinrichtung 6 zur Darstellung, wobei jeweils jedes Zeichen des vorher eingegebenen Textes um eine Stelle nach links verschoben wird. Der Darstellungsbereich links der Zeicheneingabeposition 7 ist durch den bisher eingegebenen Teil « ist ein Zeichen » eines einzugebenden Textes gefüllt, wobei die vorangehend eingegebenen Zeichen des Textes nach links über die Anzeigeeinrichtung 6 hinausreichen und nicht mehr zu sehen sind. Alle eingegebenen Zeichen sind im Datenspeicher 3 abgespeichert, und die auf der Anzeigeeinrichtung 6 nicht mehr zu sehenden Zeichen sind gegebenenfalls bereits durch das Druckwerk 8 ausgeschrieben worden. Zu dem Zeitpunkt der in Figur 2 dargestellten Texteingabe fällt dem Bediener auf, daß er sich an der ersten Stelle des Wortes « Zeichen » verschrieben und statt des Buchstabens Z den Buchstaben X eingegeben hat.

Nach dem zu verbessernden Stand der Technik müßte er jetzt (Figur 3) durch Betätigung einer Verschiebetaste 9 zur Rechtsverschiebung den auf der Anzeigeeinrichtung 6 dargestellten Text so weit nach rechts verschieben, bis das fälschlich eingegebene X in der Eingabestelle steht. Da die Anschlußzeichen aber fehlen, kann der Bediener nicht mehr erkennen, welches neue Wort mit dem (falschen) Anfangsbuchstaben X geschrieben werden sollte.

Gemäß Figur 4 ist entsprechend der Erfindung eine zweite Eingabeposition 10 vorgesehen, in die der Bediener im vorliegenden Falle durch Betätigung einer Verschiebetaste 11 zur Linksverschiebung des Textes das fälschlich eingegebene Zeichen X verschiebt. Betätigung einer der beiden Verschiebetasten 9, 11 bewirkt dabei automatisch, daß die Zeicheneingabe nicht mehr in der mit 7 bezeichneten Position sondern in der mit 10 bezeichneten Position erfolgt. Die jeweils gültige Zeicheneingabeposition kann dabei z. B. durch feste Marken auf dem Gehäuse der Anzeigeeinrichtung, durch ein Blinken der Zeichen in der Eingabestelle, durch eine von der Anzeigeeinrichtung selbst dargestellten Markierung oder durch ähnliche Maßnahmen markiert werden. Im vorliegenden Ausführungsbeispiel ist angenommen, daß zwei pfeilförmige Marker vorgesehen sind, von denen die jeweils gültige Marke durch z. B. eine Leuchtdiode beleuchtet ist, so daß in Figur 2 die Marke der Zeicheneingebeposition 7 leuchtet, während in Figur 4 die Marke der Zeicheneingabeposition 10 leuchtet.

Nach Verschieben des dargestellten Textabschnittes mit dem fälschlich eingegebenen Zeichen in die Zeicheneingabeposition 10 steht dem Bediener gegenüber der Ausführung in Figur 3 eine einfache optische Kontrollmöglichkeit zur Verfügung, welche Korrekturmaßnahmen vorzunehmen sind. Nach Vornahme der Korrektur durch überschreiben des fehlerhaften Zeichens mit dem korrekten Zeichen wird eine Rückstelltaste 12 betätigt, wodurch der Text wieder automatisch in die in Figur 2 dargestellte Lage verschoben wird, so daß mit der Neueingabe weiterer Zeichen fortgefahren werden kann. Daneben wäre auch eine Lösung denkbar, bei der unter Verzicht einer besonderen Rückstelltaste die rechte Zeicheneingabeposition 7 immer dann wieder Gültigkeit erlangt, wenn durch Betätigung einer der Verschiebetasten 9, 11 der Text mit dem zuletzt eingegebenen Zeichen (im Beispiel also das Zeichen n) in die rechte Eingabeposition verschoben ist, der Text also wieder die vor Beginn der Verschiebetätigkeit dargestellte Lage auf der Anzeigeeinrich 6 innehat.

Fällt dem Bediener erst bei Durchsicht des ausgedruckten Textes auf, daß er fälschlicherweise das Zeichen X statt des Zeichens Z eingegeben hat, so gibt es die Möglichkeit, mit bei Textbearbeitungsgeräten bekannten Suchmaßnahmen in dem im Datenspeicher 3 abgespeicherten Text den fehlerhaften Textabschnitt anzusteuern und auf der Anzeigeeinrichtung 6 zur Darstellung zu bringen. Auch hierbei muß eine der Verschiebetasten 9, 11 betätigt werden, um die fehlerhafte Textstelle durch Verschieben des Textabschnittes auf der Anzeigeeinrichtung 6 erscheinen zu lassen, wodurch wiederum die Zeicheneingabeposition 10 aktiviert wird. Eine Korrektur des fehlerhaften Zeichens erfolgt also in der gleichen, bereits beschriebenen Weise.

Bekannterweise sind der Schreibrhythmus und die Schreibgewohnheiten einzelner Bediener unterschiedlich, weshalb auch ein Eingabefehler bei verschiedenen Personen nach einer unterschiedlicher Anzahl weiterer eingegebener Zeichen bemerkt wird, die bei der gleichen Person aber häufig eine etwa gleiche Größe aufweist. Es kann deshalb zweckmäßig sein, wenn die Linksverschiebung der Zeicheneingabeposition für Korrekturzwecke in ihrer Größe einstellbar ist, so daß jeder Bediener die Korrekturstelle möglichst in der Nähe derjenigen Zeichenposition anordnen kann, in der von ihm erfahrungsgemäß am häufigsten Eingabefehler bemerkt werden.

**Ansprüche**

1. Textbearbeitungseinrichtung mit einer mehrstelligen Anzeigeeinrichtung zur einzeiligen Darstellung eines Textabschnittes, auf der bei jedem mittels einer Tastatur eingegebenen Zeichen der dargestellte Textabschnitt um eine Stelle nach links verschoben und das eingegebene Zeichen in einer auf der rechten Seite der Anzeigeeinrichtung angeordneten Zeicheneingabeposition dargestellt wird, mit einem Datenspeicher, in dem die eingegebenen Zeichen gespeichert werden und aus dem die Zeichen an die Anzeigeeinrichtung ausgebbar sind, und mit einer die Funktionsabläufe steuernden Steuereinrichtung, dadurch gekennzeichnet, daß eine Anzeigestelle links der Zeicheneingabeposition (7) als weitere Zeicheneingabeposition (10) vorgesehen ist, die von der Steuereinrichtung (4) nach Betätigung eines Eingabemittels (9, 11) für Korrekturzwecke aktivierbar ist, so daß ein mittels der Tastatur (5) zur Korrektur eingegebenes Zeichen in der weiteren Zeicheneingabeposition (10) dargestellt wird.

2. Textbearbeitungseinrichtung nach Anspruch 1, dadurch gekennzeichnet, daß die weitere Zeicheneingabeposition (10) in der Mitte der Anzeigeeinrichtung (6) angeordnet ist.

3. Textbearbeitungseinrichtung nach Anspruch 1 oder 2, dadurch gekennzeichnet, daß Eingabemittel (9, 11) zum Verschieben der auf der Anzeigeeinrichtung (6) dargestellten Zeichen vorgesehen sind, deren Betätigung die Steuereinrichtung (4) zur Aktivierung der weiteren Zeicheneingabeposition (10) veranlaßt.

4. Textbearbeitungseinrichtung nach Anspruch 1, 2 oder 3, dadurch gekennzeichnet, daß eine Rückstelltaste (12) zur Aktivierung der rechten Zeicheneingabeposition (7) und Deaktivierung der weiteren Zeicheneingabeposition (10) vorgesehen ist.

**Claims**

1. Text processing device with a muti-position display device for displaying a text section in a single line, in which for each character entered by means of a key the text section is moved one position to the left and the character entered is displayed in a character input position on the right-hand side of the display device, having a data store in which the characters entered are stored and from which the characters can be given out to the display device, and a control device which controls operations, characterised in that a display position to the left of the character input position (7) is designated as a further character input position (10) which can be activated by the control device (4) after operation of an input means (9, 11) for the purpose of corrections, so that a character input for correction purposes by means of the key (5) is displayed in the further character input position (10).

2. Text processing device according to claim 1, characterised in that the further character input position (10) is positioned in the middle of the display device (6).

3. Text processing device according to claims 1 or 2, characterised in that input means (9, 11) are provided for shifting the characters displayed by the display device (6), operation of which means initiates the control device (4) for activation of the further character input position.

4. Text processing device according to claims 1, 2 or 3, characterised in that a back-step key (12) is provided for activating the right-hand character input position (7) and deactivating the further character input position.

**Revendications**

1. Dispositif de traitement de texte comportant un dispositif d'affichage à plusieurs positions pour représenter une seule ligne d'une partie de texte, dans lequel, pour chaque symbole introduit au moyen d'un clavier à touches, la partie de texte représentée est décalée d'une position vers la gauche et le symbole introduit est représenté dans une position d'entrée de symbole placée sur le côté droit du dispositif d'affichage, une mémoire de données dans laquelle les symboles introduits sont mémorisés et de laquelle les symboles peuvent être transférés dans le dispositif d'affichage, ainsi qu'un dispositif de commande assurant la commande de déroulement des fonctions, caractérisé en ce qu'il est prévu une zone d'indication à gauche de la position d'entrée de symbole (7) comme autre position d'entrée de symbole (10), qui peut être activée par le dispositif de commande (4) après actionnement d'un moyen d'entrée (9, 11) à des fins de correction, de manière qu'un symbole introduit au moyen du clavier à touches (5) pour une correction soit représenté dans l'autre position d'entrée de symbole (10).

2. Dispositif de traitement de texte selon la revendication 1, caractérisé en ce que l'autre position d'entrée de symbole (10) est disposée au milieu du dispositif d'affichage (6).

3. Dispositif de traitement de texte selon la revendication 1 ou 2, caractérisé en ce que des moyens d'entrée (9, 11) sont prévus pour le décalage des symboles représentés sur le dispositif d'affichage (6), leur actionnement étant autorisé par le dispositif de commande (4) pour l'activation de l'autre position d'entrée de symbole (10).

4. Dispositif de traitement de texte selon la revendication 1, 2 ou 3, caractérisé en ce qu'une touche de retour (12) est prévue pour l'activation de la position d'entrée de symbole de droite (7) et pour la désactivation de l'autre position d'entrée de symbole (10).

**FIG.1**

**FIG.2**

| i | s | t | | e | i | n | | X | e | i | c | h | e | n |
|---|---|---|---|---|---|---|---|---|---|---|---|---|---|---|

**FIG.3**

| h | t | u | n | g | | i | s | t | | e | i | n | | X |
|---|---|---|---|---|---|---|---|---|---|---|---|---|---|---|

**FIG.4**

| s | t | | e | i | n | | X | e | i | c | h | e | n | |
|---|---|---|---|---|---|---|---|---|---|---|---|---|---|---|